# EUROPEAN PATENT SPECIFICATION

(11) **EP 1 333 715 B1**
(45) Date of publication and mention of the grant of the patent: **08.03.2006**
(21) Application number: 01978218.4
(22) Date of filing: 17.10.2001
(51) Int. Cl.: A01K 1/02

(54) **BOX FOR DOMESTIC ANIMALS, PARTICULARLY SOWS**
BOX FÜR HAUSTIERE, INSBESONDERE SÄUE
LOGEMENT POUR ANIMAUX DOMESTIQUES, NOTAMMENT LES TRUIES

(30) Priority: 23.10.2000 DK 200001578
(43) Date of publication of application: 13.08.2003
(73) Proprietor: EGEBJERG MASKINFABRIK A/S, 4500 Nykobing Sjaelland (DK)
(72) Inventor: RASMUSSEN, Henrik, DK-4500 Nykobing Sjaelland (DK)
(74) Representative: Nielsen, Leif
(86) International application number: PCT/DK2001/000683
(87) International publication number: WO 2002/034037

(56) References cited:
- DE-A- 2 029 600
- US-A- 3 543 723
- US-A- 4 129 096
- US-A- 4 503 809

## Description

### Background of the invention

The present invention concerns a box for domestic animals as described in the preamble of claim 1. The invention furthermore concerns the use of such box.

The invention will be explained in connection with a feeding/resting box for a sow, preferably in connection with feeding and/or inspecting the sow. However, the invention is quite general and not limited to this purpose.

Such boxes are used in piggeries arranged for untethered flocks of sows. Certain box systems are designed so that a row of juxtaposed boxes is arranged whereby a contiguous system which is space saving and cheaper than systems with separate boxes. The number of boxes in a piggery or stable may vary but is often chosen so that it is equal to the number of sows in each flock.

The feeding of untethered sows in a piggery occurs while a flock of sows stays in a bed area, and where the sows each find an empty box by themselves, closing the rear gate behind them by pushing the front gate. The sows may now eat without being disturbed. A central locking system for the boxes prevents opening of the rear gates and ensures that all sows stay in their boxes until the feeding is over, after which the central locking system is unlocked, thus releasing the rear gates. This box system ensures that all sows get the amount of feed they need. We may speak of the same amount of feed for all sows but also individual allocation of feed rations.

This separation of the sows during feeding is essential as the hierarchy in a flock may imply that weaker sows are displaced by stronger sows and thereby do not get enough feed.

A further advantage by using such boxes is that the sows during feeding may be vaccinated, inseminated, or marked in more easily than if the sows were free since the sows cannot run away and other sows cannot disturb the treatment.

Furthermore, the stay of the sows in the boxes facilitate the cleaning in the rest of the piggery, particularly in the areas where the sows are staying most of the time.

Each of the boxes are commonly equipped with a locking system which may be arranged so that the box is not opened by the central locking system after feeding. In this way, the work with isolating single sows from a flock is considerably facilitated.

US patent 4 503 809 discloses a box for one sow where the side walls and the ceiling is made up of grating bars. There is a double swing gate at the entrance of the box, where the swing gate, by a connecting means, is connected with a lid over the trough at the front part of the box. When the sow comes into the box, it is lifting the lid on the trough for getting feed. When this lid is lifted, the gate is shut, thereby preventing other sows from coming into the box. When the sow in question has finished with eating, it backs out of the box, whereby the rear gate is opened again, and the lid is put down onto the trough.

The box according to this US patent is only intended for feeding sows and therefore has the drawback that it is not possible for a person, e.g. a inseminator or a veterinarian, to stand upright in this box.

Boxes for sows consisting of a grating system constituting the side walls, the front part of the box and the rear gate are known. These prior art boxes usually has a permanent grating in front of the trough, preventing the sow from leaving the box in the forward direction. In another embodiment, the front part is delimited by a further gate, a front gate, before the trough, allowing the sow to leave the box this way. This embodiment is used particularly in cases where a sow in heat is to be mated with a boar which stays in a bed area in front of the box.

DE laid-open publication 20 29 600 discloses a box in which there is a front gate to be pushed to open position by the sow for the sow to reach the feed trough. This front gate is connected with a rear gate via a connecting means so that opening the front gate causes closing of the rear gate, and opening the rear gate causes closing of the front gate. Both gates are suspended by hinges along vertical axes, and opening therefore occurs laterally so that the rear gate in the open position extends as continuation of the side of the box. This box has the disadvantage that the connecting means between front and rear gates extends diagonally just above the box at a level over the back of the sow, thus making difficult the stay of a veterinarian or other person in the box together with sow. The side grating of the box is longer than the space in the box for the sow itself which is necessary in order for the side grating to cover the rear gate in the open state and thereby safeguard against a sow pushing the open rear gate to the closed position without being inside the box. With regard to production costs and minimising weight it will be suitable if the length of the side grating could be reduced to the length of the box itself.

An object of the invention is to provide a box for domestic animals, particularly sows, reducing the above mentioned disadvantages.

A further object of the invention is to provide a box for domestic animals with interconnected front and rear gates where the rear gate is arranged so that an animal standing outside the box cannot push the gate to its closed position.

A still further object of the invention is to provide a box for domestic animals with interconnected front and rear gates where a person standing inside the box is not encumbered by connecting means extending across the top of the box.

A still further object of the invention is to provide a box for domestic animals with a rear gate that may be kept closed while simultaneously allowing easy access to box through the gate by a person.

The particular feature of the box according to the invention is that the second axis is disposed substantially horizontally and so that the rear gate can be positioned at a level above the back of the animal in the open position. The horizontal axis of pivot of the rear gate enables the gate swing upward to the open position, where the gate extends at a distance above the floor. The sow, or another domestic animal, is therefor unable to close the rear gate again, and the use of a side grating extending rearwards of the box is avoided.

The connecting means is preferred to extend along a side of the box, consequently not impeding the freedom of movement of a person staying inside the box together with the sow. The box is therefore far more suitable and comfortable to stay in for a person than prior art boxes, and is particularly suited for the examination of the sow by a veterinarian and for medical treatment of the sow, such as vaccination. Furthermore, the box is well suited for artificial insemination.

In order to prevent an animal from being caught between the front gate and the side wall of the box in case the sow becomes uncertain and tries to withdraw after having pushed the front gate forward, it is preferred to provide the front gate with a width so much less than the width of the box that the animal may put its head, but not its shoulders, between the gate and the side of the box.

In a preferred embodiment of the box according to the invention, the rear gate is provided with an aperture appearing in the closed position of the gate, the aperture having a width prohibiting access of an animal while opening up at the upper edge of the gate so as to allow access to the inner of the box for a human.

### Description of the drawing

The invention is described in more detail in the following with reference to the drawing, in which:
- Fig. 1: is a perspective view of a first embodiment of the box according to the invention with open rear gate,
- Fig. 2: shows the same as Fig. 1, but with closed rear gate,

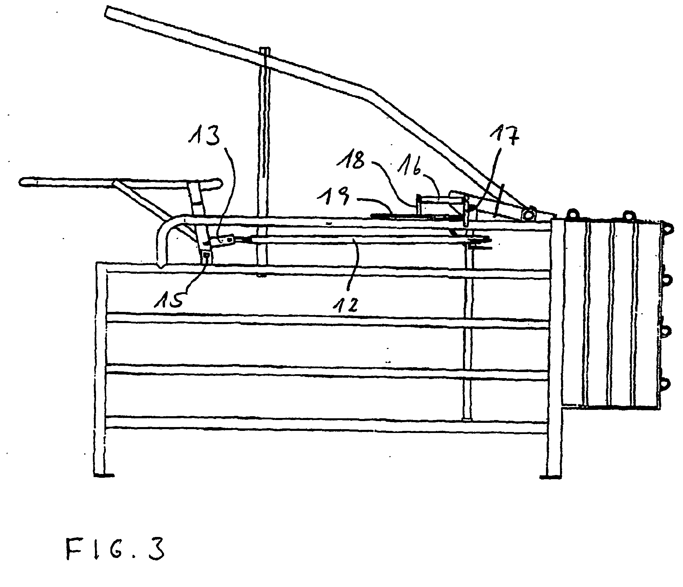

- Fig. 3: shows the same as in Fig 1 in a side view,

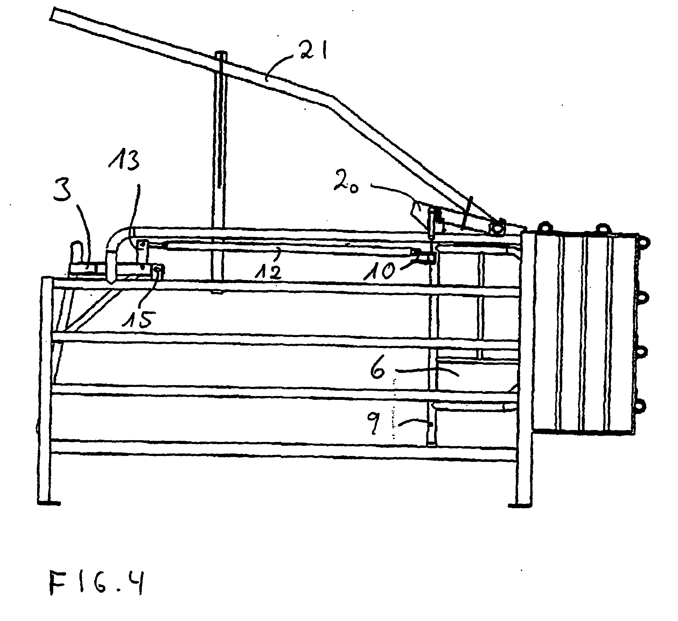

- Fig. 4: shows the same as in Fig. 2 in a side view,
- Fig. 5: is a perspective view of a second embodiment of the box according to the invention with open rear gate, and
- Fig. 6: shows the box of Fig. 5, but with closed rear gate.

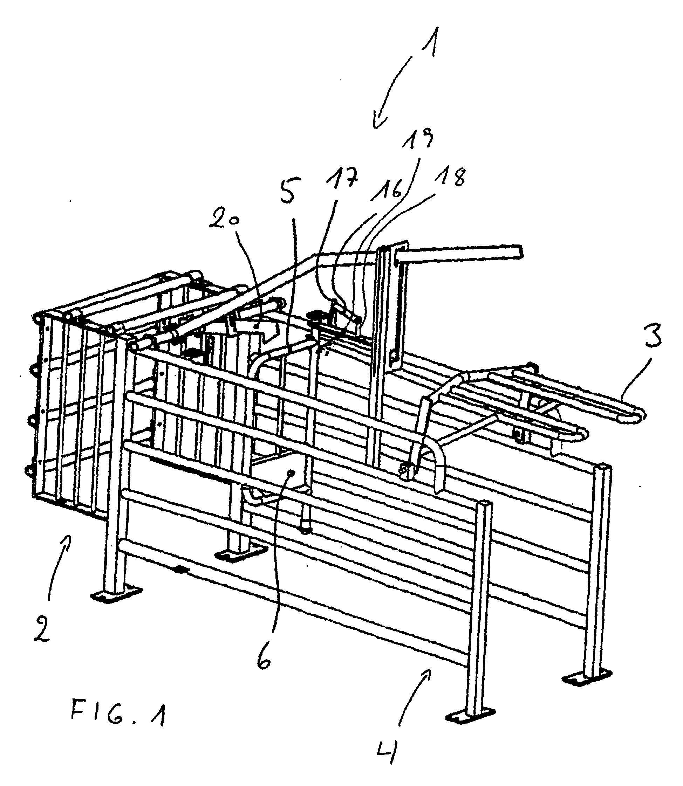

Fig. 1 is showing a box 1 according to the invention with a feed trough (not shown) in the front part 2 of the box. The rear gate 3 in rear part 4 of the box is open while the front gate 5 is closed. The box is blocked at the front with bars 22 for hindering the sow from leaving the box this way. However, it is also possible to substitute these bars 22 with a further gate so that the sow may leave the box this way.

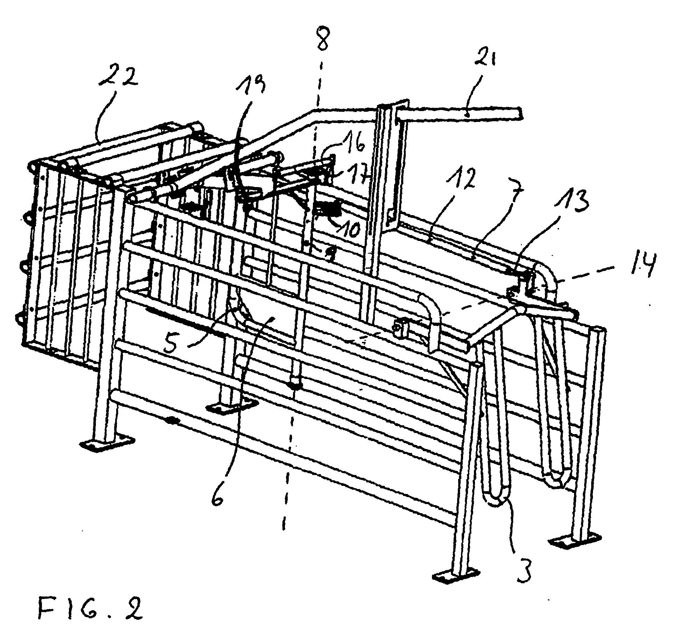

On Fig. 2, the box 1 is shown with the rear gate 3 closed and the front gate 5 open. Due to the connecting means 7, the front gate 5 is open when the rear gate 3 is closed. When a sow enters a box according to the invention, the sow will try to reach the feed trough (not shown) at the front part of the box 1. For this it is necessary to open the front gate 5 which is caused by the sow by pushing the front gate 5 with the snout. In order to facilitate this procedure for the sow, there is provided a plate 6 covering the lower part of the gate 5 in the frame of the front gate 5.

Sometimes it happens that a sow becomes uncertain during opening this gate 5 and withdraws before the gate 5 is opened. In order that a sow is not caught between the front gate 5 and the adjacent side wall during the withdrawal, the gate 5 is made with a dimension, so that it does not fill the whole width of the box 1. The distance between the side wall and the gate 5 is chosen so that the sow may get its head between the gate 5 and the side wall, but not its shoulders. In this way, the head of the sow cannot be caught between the gate 5 and the side wall of the box 1.

The lower edge of the frame in the front gate 5 is elevated to a level so that a sow lying down does not get its head caught under the front gate if it accidentally bumps into or pushes the rear gate 3.

The front gate 5 may pivot about a vertical axis 8. A vertical rod 9 is centred in this axis 8 and constitutes a part of the frame of the front gate 5. On the vertical rod 9 there is fastened a horizontal arm 10 which by means of a first coupling (not shown) is connected with the connecting rod 12. The first coupling is connected pivotable about a vertical axis with the horizontal arm 10 and is connected pivotable about a horizontal axis to the connecting rod 12.

The connecting rod 12 is connected to the rear gate 3 by a second coupling 13. The second coupling 13 is connected pivotable about a vertical axis to the connecting rod 12 and connected pivotable about a horizontal axis with the rear gate 3.

When the front gate 5 is pushed forward, the vertical rod 9 rotates clockwise about the axis 8, whereby the connecting rod 12 is displaced rearwards. This causes pivoting of the rear gate 3 about the horizontal axis 14 as the rear gate 3 is suspended pivotably by bearings 15.

In the open position of the rear gate 3, this is held in the open position by a spring 16 disposed between a fitting 17 on the side wall and a projection 18 on a horizontal rod 19, the rod 19 being fastened to the rotatable vertical rod 9. During the closing of the rear gate 3, the spring 16 will be extended and counteract the closing of the rear gate 2. The design of the suspension of the rear gate 3, however, means that already after a relatively small forward displacement of the front gate 5, which provides the pivoting of the rear gate 3, the spring 16 can no longer balance the moment about the axis of rotation 14 due to the gravitational force on the rear gate 3, after which the latter closes, and the front gate 5 opens.

In order to prevent the sow from leaving the box 1 at certain occasions, the box 1 is provided with a locking system where a hook 20 may be moved downwards by means of a handle 21 for engaging the horizontal rod 19 so that the front gate 5 is thereby prevented from being closed and the rear gate 3 from being opened. In order to release the lock again, the handle 21 is moved upwards whereby the hook 20 releases the horizontal rod 19 again.

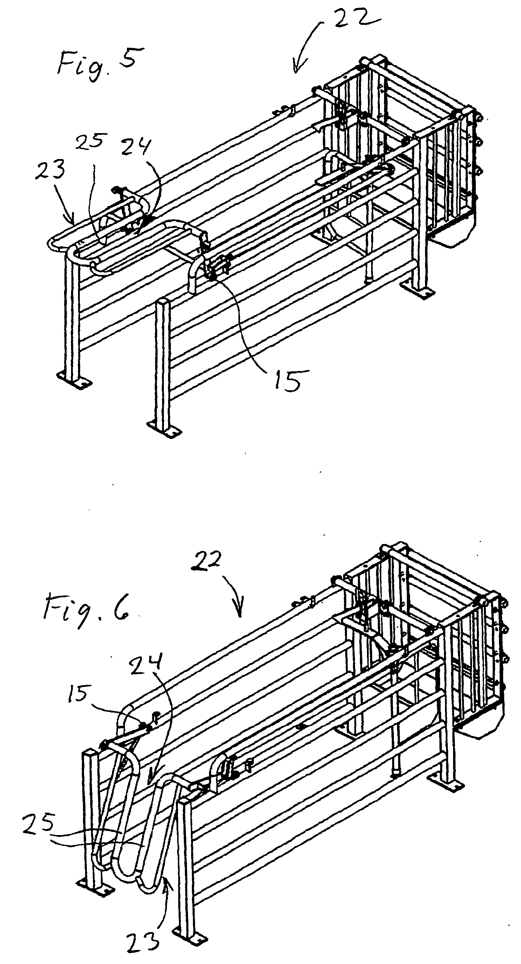

In the second, preferred embodiment of the box according to the invention as depicted on Figs. 5 and 6, the box 22 is configured as the first embodiment described above, including connection between front and rear gates but with the exception of the different design of the rear gate 23. Here, the gate 23, by suitable arrangement and shaping of the bars 25 in the grating of the gate, is provided with an elongate aperture 24 which has a largely vertical orientation and opens up at the upper edge of the gate 23 when the latter is in its closed position, see Fig. 6. The aperture 24 has a width allowing a human being to go inside the box 22 but not allowing a sow to go pass though the aperture 24 while the gate 23 is closed. A veterinarian, or other person, may thus enter the box 22 through the aperture 24 even when the gate 23 is closed, e.g. for examination or treatment of the animal while the animal is retained inside the box 22.

## Claims

1. A box for domestic animals, particularly sows, designed for only accommodating one animal in the box at a time, the box including a front gate (5) and a feed trough at a front end of the box and a rear gate (3) at a rear end of the box, where the front gate (5) is suspended pivotably about a first, vertical axis (8) and arranged so as to prevent access of the animal to the feed trough in a closed position of the front gate, and where the rear gate is suspended pivotably about a second axis (14) and arranged to prevent access to the box by other animals, and where the box comprises a connection means (7) connecting the front gate (5) with the rear gate (3) so that opening or closing, respectively, of one of the gates forces the other gate to close or open, respectively, **characterised in that** the second axis (14) is substantially horizontal, and that the rear gate (3) is arranged so as to be positioned at a level above the back of the animal in the open position.

2. A box for livestock according to claim 1, **characterised in that** the connecting means (7) substantially extends along the side of the box.

3. A box according to claim 1 or 2, **characterised in that** in the open position, the rear gate (3) is prevented from closing due to the force of gravity by means of a spring arrangement (16).

4. A box according to any preceding claim, **characterised in that** the rear end of the side of the box is aligned with the rear gate in the closed position of the rear gate.

5. A box according to any preceding claim, **characterised in that** the front gate (5) has a width so much less than the width of the box that the animal may put its head, but not its shoulders, between the gate (5) and the side of the box.

6. A box according to any preceding claim, **characterised in that** the rear gate (3) is provided with an aperture (23) appearing in the closed position of the gate (3), the aperture (24) having a width prohibiting access of an animal while opening up at the upper edge of the gate so as to allow access to the inner of the box for a human.

7. Use of a box according to any preceding claim for feeding untethered sows.

8. Use of a box according to any preceding claim for veterinary inspection of untethered sows.

## Patentansprüche

1. Box für Haustiere, insbesondere Schweine, die so entworfen ist, dass zu einem Zeitpunkt nur ein einziges Tier in die Box passt, wobei die Box eine vordere Tür (5) und einen Futtertrog am vorderen Ende der Box sowie eine hintere Tür (3) am hinteren Ende der Box aufweist, wobei die vordere Tür (5) um eine erste, vertikale Achse (8) schwenkbar aufgehängt und so beschaffen ist, dass sie den Zugang des Tiers zum Futtertrog in einer geschlossenen Stellung der vorderen Tür verhindert, und wobei die hintere Tür um eine zweite Achse (14) schwenkbar aufgehängt und so beschaffen ist, dass sie den Zugang zu der Box von anderen Tieren verhindert und wobei die Box ein Verbindungsmittel (7) aufweist, das die vordere Tür (5) mit der hinteren Tür (3) verbindet, so dass ein Öffnen oder Schließen einer der Türen die jeweils andere Tür dazu zwingt, zu schließen bzw. zu öffnen,
**dadurch gekennzeichnet, dass** die zweite Achse (14) im Wesentlichen horizontal ist und dass die hintere Tür (3) so beschaffen ist, dass sie auf einer Höhe über dem Rücken des Tiers in der geöffneten Position positioniert wird.

2. Box zur Viehhaltung nach Anspruch 1, **dadurch gekennzeichnet, dass** sich das Verbindungsmittel (7) im Wesentlichen längs der Seite der Box erstreckt.

3. Box nach Anspruch 1 oder 2, **dadurch gekennzeichnet, dass** die hintere Tür (3) in der geöffneten Position mittels einer Federanordnung (16) daran gehindert wird, sich aufgrund der Schwerkraft zu schließen.

4. Box nach einem vorhergehenden Anspruch, **dadurch gekennzeichnet, dass** das hintere Ende der Seite der Box in der geschlossenen Position der hinteren Tür auf die hintere Tür ausgerichtet ist.

5. Box nach einem vorhergehenden Anspruch, **dadurch gekennzeichnet, dass** die vordere Tür (5) eine Breite besitzt, die viel geringer als die Breite der Box ist, so dass das Tier zwar seinen Kopf, nicht jedoch seine Schultern zwischen die Tür (5) und die Seite der Box bringen kann.

6. Box nach einem vorhergehenden Anspruch, **dadurch gekennzeichnet, dass** die hintere Tür (3) mit einer Öffnung (23) versehen ist, die in der geschlossenen Position der Tür (3) auftritt, wobei die Öffnung (24) eine Breite besitzt, die den Zugang eines Tiers verhindert, während sie sich an der Oberkante der Tür erweitert, um den Zugang zu dem Innenraum der Box für einen Menschen zuzulassen.

7. Verwendung einer Box nach einem vorhergehenden Anspruch für die Fütterung nicht angebundener Schweine.

8. Verwendung einer Box nach einem vorhergehenden Anspruch für die veterinäre Untersuchung nicht angebundener Schweine.

## Revendications

1. Compartiment pour animaux domestiques, en particulier des truies, conçu pour loger un seul animal à la fois dans le compartiment, le compartiment incluant un portillon avant (5) et une auge à l'extrémité avant du compartiment, ainsi qu'un portillon arrière (3) à l'extrémité arrière du compartiment, où le portillon avant (5) est suspendu avec possibilité de pivotement autour d'un premier axe vertical (8) et agencé de façon à empêcher l'accès de l'animal à l'auge lorsque le portillon avant est en position fermée, et où le portillon arrière est suspendu avec possibilité de pivotement autour d'un second axe (14) et agencé pour empêcher l'accès au compartiment à d'autres animaux, et où te compartiment comprend un moyen de raccordement (7) reliant le portillon avant (5) au portillon arrière (3) de telle sorte que l'ouverture ou la fermeture, respectivement, de l'un des portillons force l'autre portillon à se fermer ou à s'ouvrir, respectivement, **caractérisé en ce que** le second axe (14) est sensiblement horizontal et **en ce que** le portion arrière (3) est agencé de sorte à être placé, en position ouverte, à un certain niveau au-dessus du dos de l'animal;

2. Compartiment pour bétail selon la revendication 1, **caractérisé en ce que** le moyen de raccordement (7) s'étend sensiblement le long du côté du compartiment.

3. Compartiment selon la revendication 1 ou 2, **caractérisé en ce qu'**un agencement de ressort (16) empêche le portillon arrière (3) en position ouverte de se refermer en raison de la force de la gravité.

4. Compartiment selon l'une quelconque des revendications précédentes, **caractérisé en ce que** l'extrémité arrière du côté du compartiment est alignée avec le portillon arrière dans fa position fermée du portillon arrière.

5. Compartiment selon l'une quelconque des revendications précédentes, **caractérisé en ce que** le portillon avant (5) présente une largeur beaucoup plus petite que la largeur du compartiment de telle sorte que l'animal puisse placer sa tête, mais non ses épaules, entre le portillon (5) et le côté du compartiment.

6. Compartiment selon l'une quelconque des revendications Précédentes, **caractérisé en ce que** le portillon arrière (3) est muni d'une ouverture (23) apparaissant dans la position fermée du portillon (3), l'ouverture (24) présentant une largeur empêchant l'accès d'un animal tout en ouvrant le portillon au niveau de son bord supérieur de façon à permettre un accès à un être humain à l'intérieur du compartiment.

7. Utilisation d'un compartiment selon l'une quelconque des revendications précédentes afin d'alimenter des truies non attachées.

8. Utilisation d'un compartiment selon l'une quelconque des revendications précédentes en vue d'une inspection vétérinaire de truies non attachées.
